# EUROPEAN PATENT APPLICATION

(11) **EP 3 386 127 A1**
(43) Date of publication of application: **10.10.2018**
(21) Application number: 17164938.7
(22) Date of filing: 05.04.2017
(51) Int. Cl.: H04J 3/06, H04J 3/14, H04L 1/00

(54) **RESYNCHRONIZATION OF ASYNCHRONOUS TIME SLOT RESERVATION SCHEMES IN TIME DIVISION MULTIPLEX SYSTEMS**

(71) Applicant: Alcatel Lucent, 91620 Nozay (FR)
(72) Inventor: GEBHARD, Ulrich, 70435 Stuttgart (DE); BUCHALI, Fred, 70435 Stuttgart (DE)
(74) Representative: MERH-IP Matias Erny Reichl Hoffmann Patentanwälte PartG mbB

(57) **Abstract**

This application relates to a method for synchronizing multiple nodes in an optical network through which at least one client data packet is transmitted. In particular, the at least one client packet is synchronously placed in one or more containers that are routed through the network. A container is associated with a time slot allocated for transmitting the container through the network and comprises a container identification number in a container header of the container to identify the time slot associated with the container. In particular, the one or more containers have respective one or more container identification numbers are arranged in sequence using a cyclic numbering scheme that repeats a same container identification number after a container cycle has been completed, so that the one or more containers are transmitted in a cyclic order of the one or more respective container identification numbers. The method comprises receiving an incoming container at a node from an upstream node. The method also comprises identifying a numbering offset indicative of a difference between a container identification number of the received incoming container and an internal counter value of the node. It is noted that the internal counter value may be maintained to indicate an expected container identification number of a next container to be received by the node. The method further comprises determining a frequency control signal for a local transmit clock of the node based on the numbering offset. The method also comprises adjusting a local transmit clock signal of the node based on the frequency control signal.

## Description

### Technical Field

This application relates to optical data transmission systems, and more particularly, to methods and apparatuses for transmitting data packets to network nodes using synchronous data aggregation.

### Background

Optical Ethernet (OE) has been designed as a lean optical packet network and as an alternative to the existing complex transport-network architecture. As a packet network, OE can offer pseudo-wire encapsulation to isochronous-traffic clients, for example, to Constant-Bit-Rate (CBR) clients, but also allows booking of isochronous time slots in synchronously shared Time-Division Multiplex (TDM) systems for applications sensitive to delay variation.

Due to link failure (e.g. when a link is segmented into parts), the synchronization transmission media between nodes in an optical network may become segmented where the segments form independent clock domains drifting against each other due to clock tolerances. While synchronization of time-slot reservations within each segment/clock domain is maintained, time slot positions at segment/clock domain boundaries drift and prevent restoration of inter-segment connections by just reconnecting the segments, because otherwise all connections of one segment may experience a jitter due to earlier or later arriving time slots.

Thus, there is a need for a reliable synchronization mechanism to resynchronize asynchronous segments, especially in case that link failure occurred or the network topology needs to be changed in a different way.

### Summary

In view of these needs, the present document proposes methods and apparatuses for network synchronization to enable synchronous transmission of client data packets, which may be beneficial to synchronous systems for providing, for example, constant bit rate service or constant delay.

An aspect of the disclosure relates to a method for synchronizing nodes in an optical network, e.g. an Ethernet transport network. The optical network is established for data transmission, that is, at least one client data packet can be transmitted through the optical network. Typically, the optical network comprises multiple nodes, such as a transmitting node that transmits the at least one client data packet, a receiving node that receives the at least one client data packet and a switching (intermediate or transit) node that may be located between the transmitting node and the receiving node along a transmission path in the network, and so on. Moreover, the network may comprise one or more links along at least two of the nodes in the network (i.e. physical links serving as a transmission path, which may connect the nodes in a bus or ring topology).

In general, the at least one client data packet may be synchronously placed in one or more containers that are routed through the network. More specifically, a container may be associated with a time slot of the transport network allocated for transmitting the container through the network. Typically, a container includes a container header to carry control information related to the encapsulated data packet(s), e.g. the address of a destination node to which the container and the data packet(s) is/are directed. A container may also comprise a container identification number in the container header of the container. In particular, the container identification number may be used to identify the time slot associated with the container. The container-based transport mechanism on the network may form a unidirectional bus that connects the nodes in one direction of transmission (i.e. from one end of the bus to the other end). In embodiments, a parallel bus may be provided for transmission in the other direction, thereby providing a bidirectional network.

For example, a container identification number may be assigned to a (virtual) connection which couples a plurality of the nodes of the network (e.g. virtual circuits as performed in asynchronous transfer mode (ATM) network). The skilled person will appreciate that a bus (and its physical links) may comprise one or more such virtual connections which can be implemented logically. It is appreciated that the connection may couple two or more nodes of the network, and the nodes (virtually) coupled to the connection may have access to the connection, e.g. be able to receive a container sent via the connection and/or to transmit a container in the network via the connection, thereby forming a virtual (private) bus amongst the participating nodes on the optical transmission network. In some embodiments, the connection may be a constant-bit-rate (CBR) connection or other kinds of traffic, i.e. a connection may be associated with a traffic class based on traffic contract as performed in e.g. an ATM network.

Furthermore, the one or more containers may have respective one or more container identification (ID) numbers arranged in continuous sequence. Especially, the respective one or more container identification numbers may be arranged using a cyclic numbering scheme that repeats a same container identification number after a full container cycle (e.g. a container numbering cycle) has been completed, so that the one or more containers may be transmitted in corresponding time slots in a cyclic order of the one or more respective container identification numbers. The cyclic container numbering scheme thus defines the time slots for transmitting the containers including the data packets, wherein one or more time slots are reserved for a connection. It is appreciated that the total number of containers in the container cycle may be determined based on a transmission rate on links between nodes. Alternatively, one may also determine the total number of containers in the container cycle based on a transmission rate on the bus, e.g. a total transmission rate at which data may be sent across the bus, and a desired traffic granularity (e.g. a minimum rate for a connection as mentioned above).

According to the disclosure, the method may be implemented at a node in the network. For example, the node may be an intermediate node that receives data packets from a neighboring node and/or transmits data packets to a neighboring node. The neighboring node from which the node receives data packets can be referred to as an upstream node, while the neighboring node to which the node transmits data packets can be referred to as a downstream node. Since the at least one client packet may be placed in one or more containers for transmission, the method comprises receiving an incoming container at the node from an upstream node.

In detail, a node may maintain an (internal) counter value to track container identification numbers of received containers. In embodiments, the counter value is indicative of an expected container identification number which represents the container identification number of a container which the node expects to receive next. In other words, in case that synchronization of the network is maintained, a container that is received by a corresponding node carries a container identification number that matches the internal counter value of the node. Accordingly, the counter value (i.e. the expected container identification number) may be compared with the container identification number of a received container (i.e. the received container ID number) to determine/monitor a synchronization state of a node. For example, if the counter value does not match the received container ID number, it may be determined that the node is not synchronized with its upstream node. On the other hand, if the counter value matches the received container identification number, it may be determined that the node is synchronized with its upstream node. In this way, the comparison result may relate to a numbering offset indicative of a difference between the container identification number of the received incoming container and the internal counter value of the node. Alternatively, the counter value may represent the container identification number of the last received container, so that the numbering offset between received container identification number and the counter value is 1 if the node is synchronized.

According to the disclosure, the method also comprises identifying the numbering offset between an actual container identification number carried by the received container and the internal counter value. As mentioned, the internal counter value may be maintained to indicate an expected container identification number of a next container to be received by the node.

Also, the method comprises determining a frequency control signal for a local transmit clock of the node. The local transmit clock may be associated with a local transmit clock signal of the node according to which the node may transmit/forward client data packets in one or more containers to downstream nodes. Moreover, the determination of the frequency control signal may be based on the identified numbering offset. Subsequently, the method further comprises adjusting the local transmit clock signal or local transmit clock of the node based on the determined frequency control signal. It should be noted that the node may be disconnected with its neighboring node(s) (e.g. the upstream node) during transmission in case of link failure. In such cases, determining a frequency control signal for a local transmit clock of the node and adjusting a local transmit clock signal of the node may be performed after reconnecting the node to the neighboring (upstream) node(s).

For identifying the correct numbering offset, in case that the container identification number of the received incoming container has exceeded the number of containers in the container cycle (i.e. the total number of containers) and starts again with its initial value (e.g. "1"), the method may further comprise adding an offset buffer value to the container identification number of the received incoming container. The offset buffer value may comprise the total number of containers in the container cycle. Alternatively or in addition, in case that the internal counter value has exceeded the number of containers in the container cycle and starts again with its initial value (e.g. "1"), the method may also comprise adding an offset buffer value that coincides with the total number of containers in the container cycle to the internal counter value for identifying the numbering offset. The adding of the offset buffer value may be stopped once the internal counter value and the received container identification number have both exceeded the total number of containers. By this way, phase jumps occurring at a boundary between container cycles (i.e. at a transition from the last container ID number in a cycle to the first container ID number in a next cycle) can be avoided for providing a continuous (smooth) frequency control signal.

In some embodiments, adjusting a local transmit clock signal of the node may comprise increasing or decreasing the frequency of the local transmit clock of the node (e.g. a local oscillator) based on the frequency control signal. As the frequency of the local transmit clock changes, the container transmit rate changes and over time the numbering offset may change accordingly. For example, increasing or decreasing the container transmit rate implies that the node accelerates or decelerates the container numbering cycle so that after some time the container ID numbering on a link may be caught up with the container ID numbering on another link and the container identification numbers of received containers may match the counter values of the nodes. In this way, the numbering offset may decrease along with (properly) increasing or decreasing the frequency of the local transmit clock. When the frequency of the local transmit clock is optimally adjusted, the numbering offset may reach zero. In this case, the counter value matches the received container identification number, which implies that the node is synchronized with its neighboring (e.g. upstream) node. After the numbering offset has achieved zero, the frequency control signal may be zeroed or reversed, i.e. the frequency changing direction may be reversed, for example, from increasing to decreasing, or vice versa. Accordingly, the frequency of the local transmit clock of the node may not be over-compensated, and synchronization between nodes can be well maintained.

Optionally, the method may further comprise recovering an incoming clock signal from the received incoming container(s). After obtaining the incoming clock signal, the local transmit clock signal of the node may be adjusted further based on the obtained incoming clock signal. In detail, the received incoming container may include symbols for carrying control information and client data, and recovering the incoming clock signal may comprise recovering the incoming clock signal from symbols of the received incoming container. It should be noted that the incoming clock signal may be indicative of a clock rate at which the incoming containers are received.

In some embodiments, the method may also comprise, when the numbering offset has been removed, synchronizing the local transmit clock signal of the node with the incoming clock signal, so that the container identification number of the received incoming container and its timing coincides with an actual time slot allocated for the received incoming container. In other words, the timing of the local transmit clock signal and the timing of the incoming clock signal are synchronized, i.e. both clocks are synchronous. Once the numbering offset has been eliminated, the method may comprise synchronizing the local transmit clock signal of the node with the recovered incoming clock signal, so that timing of a transmitted container coincides with an actual time slot allocated for a corresponding received incoming container. When the local transmit clock signal of the node is synchronized with the incoming clock signal, the method may further comprise forwarding the received incoming container to a downstream node based on the incoming clock signal, in case that the numbering offset approaches or has reached zero. That is, when clock synchronization and container ID (numbering) synchronization (i.e. the node is synchronized with its neighboring node(s)) are achieved, the node can safely forward the received incoming container downstream, and the network can reach a synchronization state.

In some embodiments, the method may comprise generating (at the node) a new container to be transmitted to a downstream node. For example, the new container may be generated for transmitting data packets from a client that is associated with the node. In particular, the new container may be transmitted or sent using the local transmit clock signal of the node (e.g. the node's own clock that may not be necessarily synchronous to the (recovered) incoming clock). In case that the node is not synchronized with its neighboring node(s) (i.e. the numbering synchronization is not achieved), the new container is transmitted/sent based on the local transmit clock of the node which is not synchronous to the incoming clock, and the received incoming container is not forwarded to a downstream node. In case that the local transmit clock and the incoming clock are synchronous, the new container is transmitted/sent based on the recovered incoming clock and the received incoming container may be forwarded to a downstream node. It is noted that a link failure may have been repaired, and the node may have been re-connected to its neighboring node(s) even though the nodes (numbering) are still not synchronized with each other.

It should be further noted that the received incoming container may be buffered at the node, especially before being transmitted/forwarded to a downstream node. The method may further comprise decoding a container header of the received incoming container and extracting the container identification number of the received incoming container. The method may also comprise extracting control information of the received incoming container which may be received e.g. via a control channel. In addition, the method may comprise dropping (forwarding) data destined to the node according to address information included in the container header. For example, the node may determine whether the node is a destination node of the data included in the received incoming container and may forward the data to a client that is coupled/associated with the node. In case that the container numbering synchronization is not yet achieved, the node may refrain from forwarding a received incoming container due to the asynchronousness between the local transmit clock and the incoming clock. Then, the method may further comprise discarding the received incoming container after extracting the container identification number of the received incoming container. Further, the node may transmit a new container that was generated by itself to a downstream node (i.e. the transmission of the new container is based on the local transmit clock of the node asynchronous to the incoming clock).

In some embodiments, the local transmit clock signal (i.e. the local oscillator) of the node may be adjusted using a phase-locked loop (PLL). In this case, determining a frequency control signal may comprise generating an offset control signal based on the numbering offset and converting the offset control signal into the frequency control signal. More specifically, the offset control signal may be generated for controlling the PLL, and the frequency control signal may be applied by the PLL to the local oscillator for the (frequency) adjustment. It should be noted that the frequency control signal may relate to a frequency difference between an input frequency and an output frequency of the PLL. Accordingly, the local transmit clock of the node can be properly controlled based on the simultaneously monitored numbering offset, in order to bring the local transmit clock of the node close to the incoming clock (signal) without losing synchronization with the clock of a downstream station, thereby enabling clock synchronization between the nodes.

Configured as above, the numbering offset (mismatch) between the received container ID number and the node counter can be compensated efficiently, and the clock signals of the nodes can be synchronized properly, thereby improving the synchronization state of the network. Accordingly, non-synchronized segments caused by link failure can catch up with each other and be resynchronized again without affecting internal connections within the individual segments.

Another aspect of the disclosure relates to an apparatus for synchronizing multiple nodes in an optical network (e.g. an Ethernet transport network) through which at least one client data packet is transmitted. The disclosed apparatus may be configured to perform the above mentioned method. As mentioned above, the at least one client data packet may be synchronously placed in one or more containers that are routed through the network. In particular, a container may be associated with a time slot allocated for transmitting the container through the network. Typically, a container comprises a container header to carry control information related to the encapsulated data packet(s), e.g. the address of a destination node to which the data packet(s) is/are directed. A container may also include a container identification number in the container header of the container to identify the time slot associated with the container. By applying such container-based transport mechanism on the network, a unidirectional bus connecting the nodes in one direction of transmission (i.e. from one end of the bus to the other end) may be established, and/or a parallel bus may be provided for transmission in the other direction to achieve a bidirectional network. In a bus architecture, one or more virtual connections may be logically enabled for transmitting data packets included in the container(s).

Furthermore, the one or more containers may have respective one or more container identification (ID) numbers which may be arranged in consecutive sequence using a cyclic numbering scheme. Especially, the cyclic numbering scheme may repeat a same container identification number after a full container cycle has been completed, in order to transmit the one or more containers in corresponding time slots in a cyclic order of the one or more respective container identification numbers. As indicated above, the total number of containers in the container cycle may be determined based on a transmission rate on links between nodes. Alternatively, one may also determine a total number of containers in the container cycle based on a transmission rate on the bus, e.g. a total transmission rate at which data may be sent across the bus, and a desired traffic granularity (e.g. a minimum rate for a connection).

According to the disclosure, the apparatus may be employed in a node of the network (e.g. an optical transport network), such as an intermediate node that receives data packets from a neighboring (upstream) node and/or transmits data packets to a neighboring (downstream) node. The apparatus comprises an optical input interface which is coupled with the optical network and a processing unit. In detail, the optical input interface is configured to receive an incoming container from an upstream node. The processing unit is configured to identify a numbering offset indicative of a difference between a container identification number of the received incoming container and an internal counter value of the node. As mentioned, the internal counter value may be maintained to track the container identification number of received containers, e.g. to indicate an expected container identification number of a next container to be received by the node, or of a last received container identification number.

Furthermore, the apparatus comprises a clock controlling unit which is configured to determine a frequency control signal for a local transmit clock of the node. The node may transmit/forward client data packets in one or more containers according to the local transmit clock. It should be noted that the frequency control signal may be determined based on the numbering offset. Moreover, the clock controlling unit is also configured to adjust the local transmit clock of the node based on the frequency control signal. In case that a link failure has occurred, the frequency control signal may be determined (for the local transmit clock of the node) and the local transmit clock of the node is adjusted after the node is reconnected to the upstream node.

In some embodiments, the apparatus may further comprise a storage unit which is configured to store an offset buffer value that represents the total number of containers in the container cycle. In this case, for identifying the numbering offset, the processing unit may be further configured to add the offset buffer value to the container identification number of the received incoming container when the container identification number of the received incoming container has exceeded the number of containers in the container cycle. Optionally, the processing unit may be further configured to add the offset buffer value to the internal counter value for identifying the numbering offset when the internal counter value has exceeded the number of containers in the container cycle. Accordingly, phase jumps taking place at a transition from the last container ID number in a cycle to the first container ID number in a next cycle can be avoided to ensure a continuous (smooth) frequency control signal.

In some embodiments, the clock controlling unit may be configured to increase or decrease the frequency of the local transmit clock of the node based on the frequency control signal. In particular, the numbering offset may decrease along with increasing or decreasing the frequency of the local transmit clock. Moreover, the frequency of the local transmit clock may be continuously adjusted until the numbering offset reaches or approaches zero. It is appreciated that the frequency change of the local transmit clock may be determined by the frequency control signal and may depend on the numbering offsets, i.e. a small frequency change is applied to adjust the local transmit clock when the numbering offset is small, while a large frequency change is applied to adjust the local transmit clock for a large numbering offset. In other words, the amount of the applied frequency change may relate to the current numbering offset. It is further appreciated that the frequency adjustment may be achieved by applying a number of steps of changes in the frequency in order to avoid overcompensation of the numbering offset (i.e. overshooting a target of catching up a certain number of containers). This also avoids an abrupt change in the transmit clock frequency which may cause problems at the receiver side. When the numbering offset reaches zero, the nodes are synchronized with each other, and further changes to the local transmit clock frequency may not be necessary and a corresponding frequency control signal may be determined accordingly (e.g. set to zero). In some embodiments, after the numbering offset has achieved zero, the frequency control signal may be reversed to change the frequency adjusting direction from increasing to decreasing, or vice versa. Thereby, overcompensating the frequency of the local transmit clock of the node can be avoided, and synchronization between nodes can be well maintained.

Optionally, the processing unit may be configured to further generate a new container to be transmitted to a downstream node. It should be noted that the new container may be generated at the node using the local transmit clock of the node. Also, the processing unit may be further configured to recover an incoming clock signal from the received incoming container. In this case, the local transmit clock of the node may be adjusted further based on the obtained incoming clock signal to align the timing of both clocks. In some embodiments, the processing unit may comprise a clock recovery unit configured to recover the incoming clock signal from symbols of the received incoming container. It should be noted that the incoming clock signal may be indicative of a clock rate at which the incoming container is received.

In general, the apparatus may further comprise an optical output interface coupled with the optical network. In some embodiments, the clock controlling unit may be further configured to synchronize the local transmit clock of the node with the incoming clock signal, so that the container identification number of the received incoming container and its timing coincides with an actual time slot allocated for the received incoming container. In other words, the timing of the local transmit clock signal and the timing of the incoming clock signal are synchronized, i.e. both clocks are synchronous. Once the numbering offset has been eliminated, the clock controlling unit may be configured to synchronize the local transmit clock signal of the node with the recovered incoming clock signal, so that timing of a transmitted container coincides with an actual time slot allocated for a corresponding received incoming container. When the local transmit clock signal of the node is synchronized with the incoming clock signal, the optical output interface may be configured to forward the received incoming container to a downstream node based on the incoming clock signal in case that the numbering offset approaches or has reached zero.

As mentioned above, the received incoming container may be buffered at the node. During the buffering, the processing unit may be further configured to decode a container header of the received incoming container and to extract the container identification number of the received incoming container and/or control information received via e.g. a control channel, and/or to drop data destined to the node. Additionally, the processing unit may be configured to discard the received incoming container after extracting the container identification number of the received incoming container, e.g. when the synchronization has not yet been achieved.

In some embodiments, the clock controlling unit may comprise a phase-locked loop (PLL) and a signal generating unit for frequency adjustment. More specifically, the PLL may be configured to adjust the local transmit clock of the node. Furthermore, the signal generating unit may be configured to generate the frequency control signal to be applied by the PLL for the adjustment based on the numbering offset. It is appreciated that the frequency control signal may relate to a frequency difference between an input frequency and an output frequency of the PLL. By this way, the local transmit clock of the node can be properly adjusted to match the incoming clock (signal) and the node forwards/propagates the local transmit clock to the downstream station.

As a result, the proposed apparatus enables synchronization both in the container numbering and the node clock, so that the network can reach a synchronization state and remain its synchronization state after link failure has occurred.

It is thus appreciated that the synchronizing process as proposed in the disclosure provides a reliable synchronization mechanism across segments of a network and is capable of maintaining working connections in each of the segments during this (re-)synchronization process.

Implementations of the disclosed apparatus (e.g. the processing unit as mentioned above) may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed devices can be implemented as a method, as the skilled person will appreciate.

### Brief Description of the Figures

Embodiments of the disclosure are explained below in an exemplary manner with reference to the accompanying drawings, wherein
**Fig. 1** schematically illustrates an example of a network with reserved connection for a TDM system;
**Fig. 2(a)** illustrates an example of a reservation map (e.g. a matrix) for a 1.6Tbps TDM system according to embodiments of the disclosure;
**Fig. 2(b)** schematically illustrates a possible structure of a container for transport through an optical transmission network according to embodiments of the disclosure;
**Fig. 3(a)** schematically illustrates transmission of data packets along nodes coupled by links in a synchronized state according to embodiments of the disclosure;
**Fig. 3(b)** schematically illustrates transmission of data packets along nodes coupled by a previously segmented link after its repair according to embodiments of the disclosure;
**Fig. 3(c)** schematically illustrates transmission of data packets along nodes coupled by a previously segmented link after its repair according to embodiments of the disclosure;
**Fig. 4** schematically illustrates an example apparatus for container processing for re-synchronizing nodes after reconnection according to embodiments of the disclosure;
**Fig. 5(a)** schematically illustrates an example for identifying the numbering offset according to embodiments of the disclosure;
**Fig. 5(b)** schematically illustrates an example of employing offset buffer values for identifying the numbering offset according to embodiments of the disclosure;
**Fig. 6(a)** schematically illustrates an example of a clock controlling unit for adjusting the local transmit clock of the node according to embodiments of the disclosure;
**Fig. 6(b)** schematically illustrates an example of a clock controlling unit for adjusting the local transmit clock of the node according to embodiments of the disclosure;
**Fig. 7** graphically illustrates the synchronization performance using the proposed apparatus according to embodiments of the disclosure; and
**Fig. 8** illustrates processing steps for the proposed method for synchronizing multiple nodes in an optical network according to embodiments of the disclosure.

### Detailed Description

A basic aspect in this disclosure is directed to data transmission in an optical network (e.g. Optical Ethernet (OE)) using fundamental elements, e.g. a container (slot) format for transport of aggregated packets and a container header containing header information (e.g. control information for the container). In particular, isochronous time slots may be booked (reserved) in, for example, a shared and synchronous Time-Division-Multiplex (TDM) system, which forms logical connections of the nodes and may be suitable for applications that require constant bit rate service or constant delay.

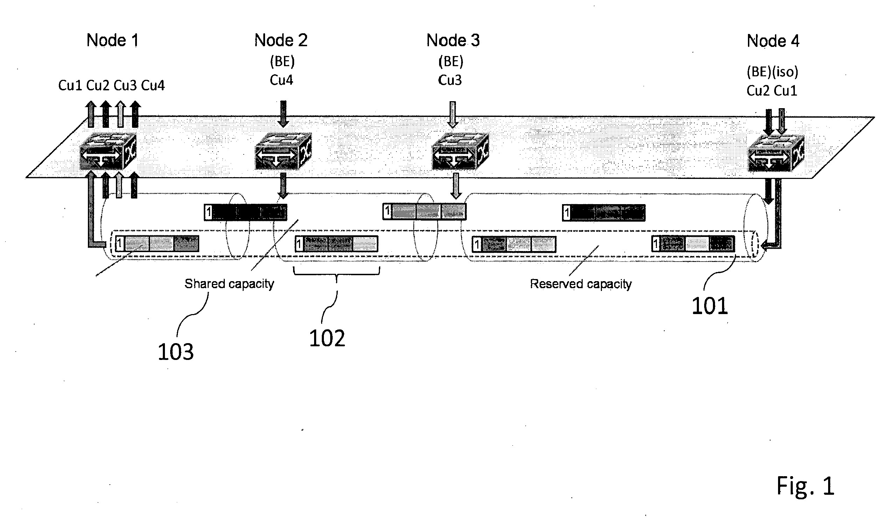

**Fig. 1** schematically illustrates an example of a network with reserved connection for a TDM system. In the TDM system, an isochronous/reserved connection (indicated as reserved capacity **101)** and some best-effort connections (indicated as shared capacity **103)** share the time slots of an optical transmission media (e.g. an optical fiber). In a transport system, time slots have a structure which is referred to as a container, and containers to be sent in a network may be arranged in sequence according to the container identification (ID) numbers which are included in the containers to indicate the time slots allocated for the containers. In this example, the network is shared by three non-reservation customers cu2 - cu4 and by a reserved-connection customer cu1. As shown in **Fig. 1****,** pipe (connection) **101** is reserved for customer cu1 for transmitting the client signal of customer cu1 from node 4 to node 1 using containers **102.** In general, the pipe **101** reserved for customer cu1 cannot be accessed by customers cu3 and cu4 at intermediate nodes 3 and 2, respectively, which are regarded as transit (switching) nodes for customer cu1.

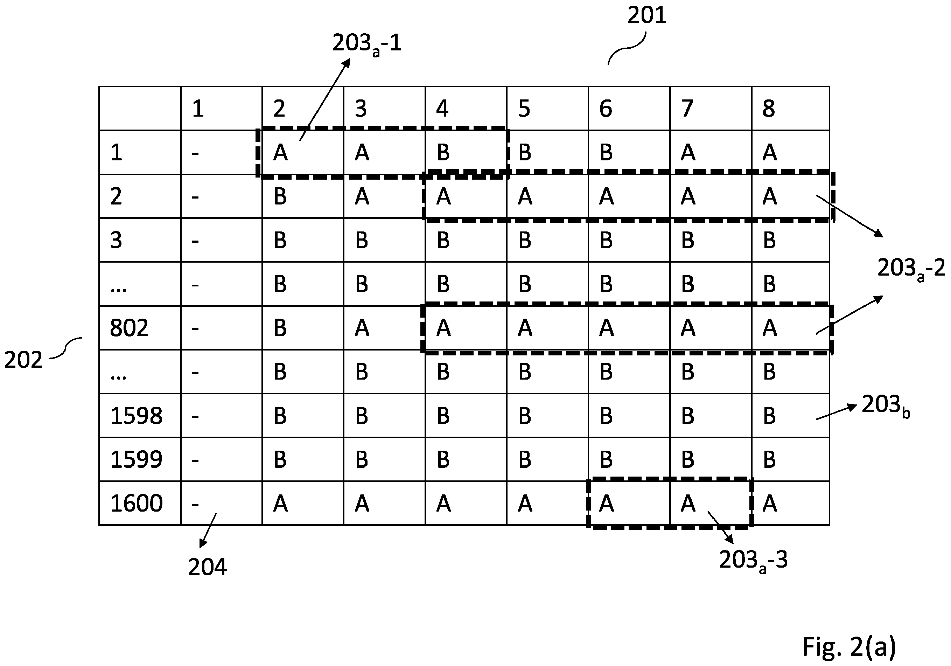

As mentioned above, containers may be transmitted in a cyclic order of the respective container ID numbers, and the time slots associated with the containers may carry a fixed modulo-N sequence number (N being the total number of container identification numbers in a cycle) which can be unambiguously recognized by each node on the transmission path. **Fig. 2(a)** illustrates an example of a reservation map (e.g. a matrix) for a 1.6Tbps TDM system with 8 nodes (as indicated by row **201)** and a modulo-1600 sequence (as indicated by column **202),** in which each time slot (container) represents a capacity of 1Gbps. In this example, a container (slot) cycle has 1600 container ID numbers, and reservations of isochronous time slots can be found in slot-along-nodes matrix for one direction. The skilled person will appreciate that arbitrary numbers of nodes and container IDs may be applicable for providing the map, i.e. arbitrary numbers of columns/rows may be applicable.

As shown in **Fig. 2(a)****,** isochronous time slots (which are reserved for e.g. constant-bit-rate CBR connections) are marked "A" **203a,** while time slots, which are not reserved and can be used by other traffic (e.g. best-effort packet traffic), are marked "B" **203b.** It should be noted that time slots can be booked for a full path or a partial path along the nodes. The matrix illustrates three possible connections: 1Gbps connection **203a-1** that reserves container ID number 1 from node 4 to node 2, 2Gbps connection **203a-2** that reserves two container ID numbers 2 and 802 from node 8 to node 4 and 1Gbps connection **203a-3** that reserves container ID number 1600 from node 7 to node 6. In the embodiment, no time slots are reserved for node 1, which indicates that there is no traffic at node 1 (as indicated by **204).** It is also noted that, in this example, node 1 is located at the end of the bus having a direction from node 8 to node 1 according to the matrix illustrated in **Fig. 2(a)****,** and that node 1 therefore does not have downstream nodes. In some examples, another matrix showing possible connections may be applied for the other direction from node 1 to node 8. The skilled person will appreciate that the detailed implementation of the container reservation map has been disclosed in the previous European application No. 17160930.8, which is incorporated herein by reference in its entirety.

In general, a TDM system may comprise two counter-directional links which are synchronized independently. Although one-way reservations are conceivable, one may also consider the connections to be bidirectional. It should be noted that **Fig. 2(a)** shows the reservations for one direction of a bidirectional connection, and the other direction may be assumed to be symmetrical. It is appreciated that control information across the TDM system can be passed in both directions in a separate control channel, independent of isochronous reservations. It is further appreciated that each node may contain a node-internal counter to identify the container (time slot) to be received next. The internal counter may be increased with every generated (in case that the node is the first station on a bus) or received time slot (in case that the node is an intermediate station) to enable monitoring of synchronization state and maintaining the numbering scheme in case of link failures.

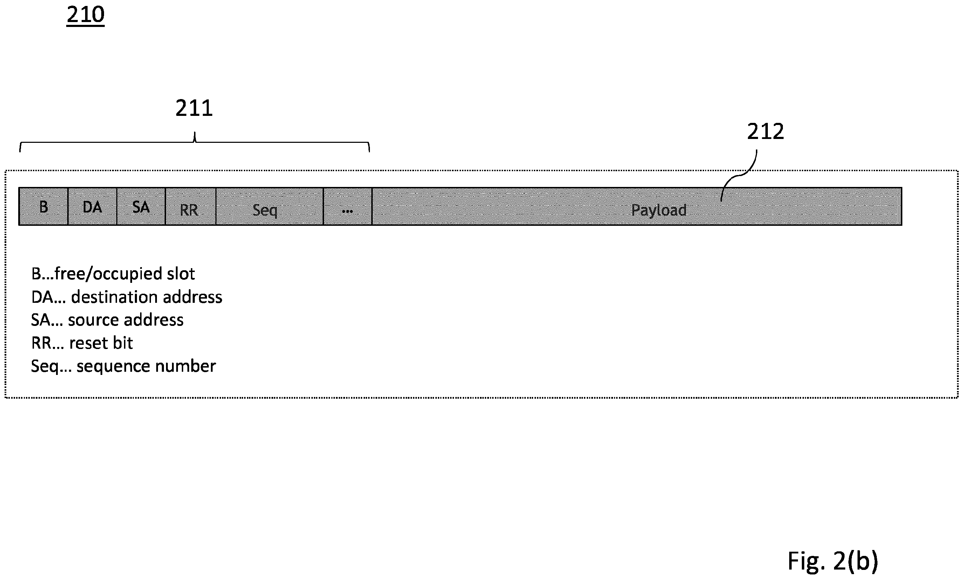

**Fig. 2(b)** schematically illustrates a possible structure of a container **210** for transport through an optical transmission network according to embodiments of the disclosure. The container **210** represents an OE container structure used for carrying/encapsulating the client data packet(s) to be transmitted in the optical transmission network (e.g. an Optical Ethernet network), which have been disclosed in the previous European application No. 15191130.2 as incorporated herein by reference in its entirety. In general, the container **210** includes a container header **211** and a container payload portion **212.** More specifically, the container payload portion **212** may be segmented into a plurality of subcontainers (e.g. a standard OE container is subdivided into 80 subcontainers) to carry client data. The container header **211** includes control information and FEC information to protect the container header (control) information.

For example, the control information may contain a busy (B) field that identifies whether the container (slot) is free or occupied and address information (e.g. a destination address DA and a source address SA). The control information may also include a "Seq" field to carry the sequence number that is associated with the container identification number. When considering N=1600 containers to form a container cycle for the modulo-N numbering scheme, the "Seq" field carries a sequence number in modulo-1600. Moreover, the control information may optionally include a "RR" field for a reset bit to indicate whether the node should reset its counter value, i.e. to trigger a reset of an internal numbering scheme of a node. The skilled person will appreciate that the detailed container header structure and the usage of the fields in the container header have been disclosed in the previous European application No. 17160930.8, which is incorporated herein by reference in its entirety.

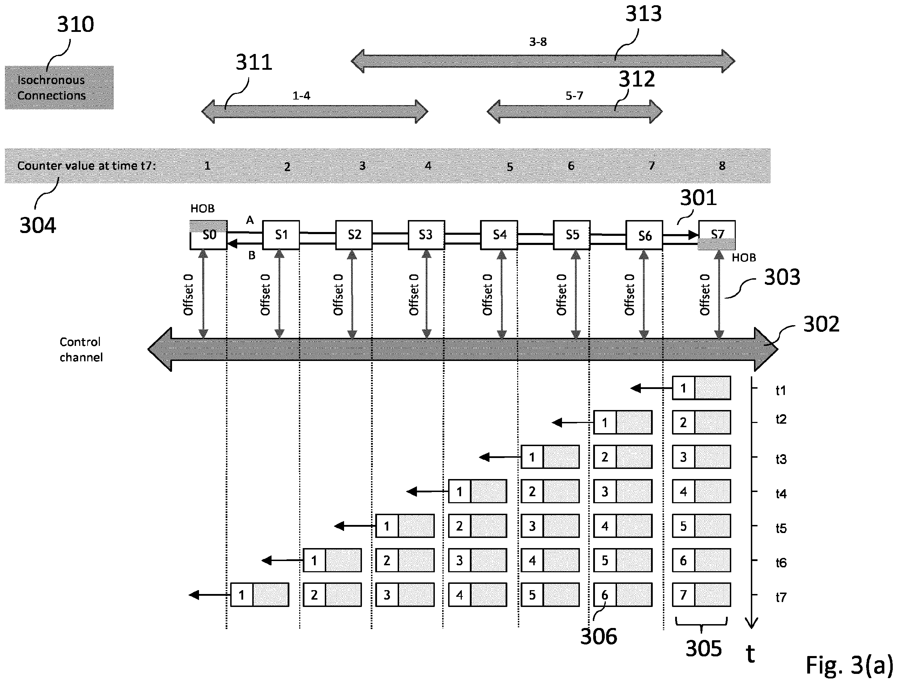

As mentioned above, the network comprises one or more (physical) links which may connect the nodes in e.g. a bus or ring topology. If the network topology is a bus, the first node (which is also referred to Head of Bus (HOB)) for each direction is responsible for initiating the sequence number. **Fig. 3(a)** schematically illustrates transmission of data packets along nodes coupled by links in a synchronized state according to embodiments of the disclosure. The example shows a newly initiated, synchronized bus on a link **301** with nodes S0 and S7 as HOBs for buses A and B, respectively. Each node counter **304** maintains a value of the next expected (to be generated) container ID number. This value can be referred to as a node counter value which may be stored in a storing unit (e.g. memory) of the node.

In detail, one or more containers **305** are transmitted in the direction of bus A (e.g. for uplink) from node S0 to node S7 or in the direction of bus B (e.g. for downlink) from node S7 to node S0. Each container **305** includes a container identification number **306** to indicate its associated time slot as mentioned above. Considering transmission in the direction of bus B (i.e. from S7 to S0), HOB B has generated the first 7 containers of a (new) cycle at time t7, and the container having ID number 1 is about to arrive at node S0. For simplicity, one may assume that the inter-node delay is exactly one time slot, i.e. the counter of an upstream node is exactly one unit ahead of its downstream neighbor. In other words, container ID numbers shown herein are the numbers immediately before their arrival at the downstream node, i.e. the container ID numbers match the next expected sequence number (counter value) of the downstream node. On the other hand, the counter of the upstream node is already one unit ahead.

It should be further noted that the nodes may report the difference between their counter value and the received container ID as their current counter offset **303** to the HOB(s) for monitoring purposes. In particular, the counter offset **303** may be reported/broadcasted to other stations (nodes) via a control channel (CC) **302,** and the HOBs are also known to every station via the CC **302.** According to **Fig. 3(a)****,** the nodes are synchronized and thus report a counter offset of 0. Unless a header of an incoming container has a reset bit set (RR bit), the nodes may forward the container header(s) with a sequence (ID) number equivalent to their own counter value, and even if there is a mismatch between the received container ID and the counter value, the nodes may overwrite the container ID with the counter value. When the HOB(s) sets the reset bit or by configuration from the network management, the nodes re-synchronize their internal numbering scheme (counter values) with the received numbers (container IDs). It is further noted that three isochronous connections **310** are depicted herein: connection **311** from node S3 to node S0, connection **312** from node S6 to node S4 and connection **313** from node S7 to node S2.

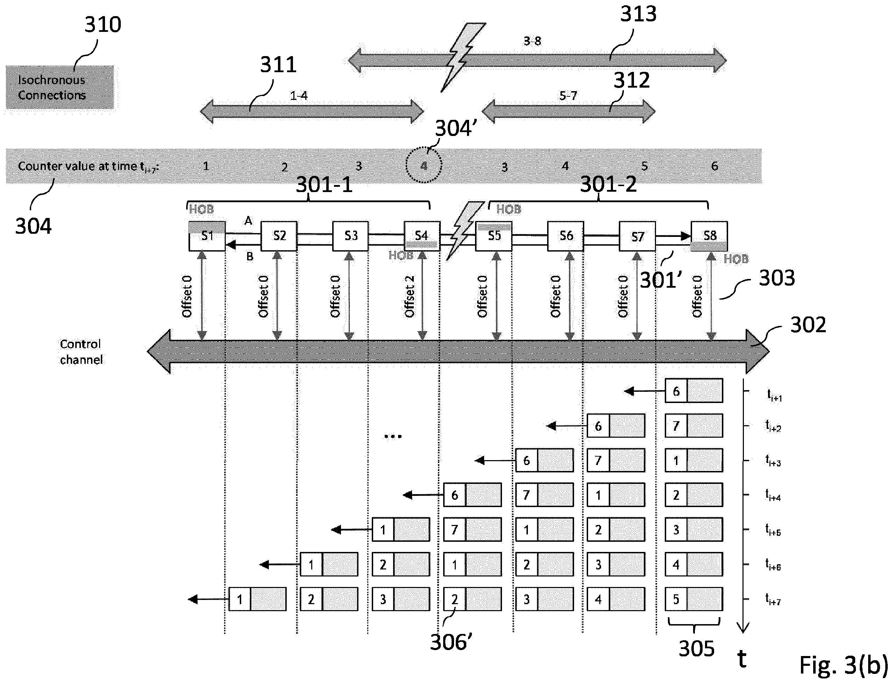

**Fig. 3(b)** schematically illustrates transmission of data packets along nodes coupled by a segmented link **301'** (after being repaired but before numbering re-synchronization) according to embodiments of the disclosure. Notably, the link **301'** may be similar to the link **301** but is segmented into parts due to e.g. link failures. A link failure is represented by the lighting icon in **Fig. 3(b)****,** which is located at the position where the link (e.g. a cable) was previously broken (e.g. cut). In order to detect/determine the counter offset, it may be beneficial to identify the clock of the upstream node (through re-connecting the parts of the broken link e.g. at the location of the lighting icon). It is noted that the term "segmented" herein refers to container connections (i.e. the numbering scheme), and that the term "segmented link" refers to separation of the numbering scheme but not to the cut link (i.e. link failures). Herein, link failure results in two independently clocked bus segments with numbering-scheme offset. In detail, the link **301** as shown in **Fig. 3(a)** is segmented into two sections **301-1** and **301-2** at the location between nodes S4 and S5, where nodes S1 and S4 are HOBs for the left segment **301-1** and nodes S5 and S8 are HOBs for the right segment **301-2.** Hereafter, the direction of bus B is considered for simplicity, i.e. connection from node S4 to node S1, connection from node S7 to node S5 and connection from node S8 to node S3 are the isochronous connections which are taken into account.

**Fig. 3(b)** illustrates a situation after a link failure between S4 and S5 had occurred and has been repaired. As indicated, bus B is reconnected after segmentation and has HOBs in each segment. During the failure, bus B was divided into an upstream segment coupling the nodes S8, S7, S6 and S5, and a downstream segment coupling the nodes S4, S3, S2 and S1 (and vice versa for bus A). It is noted that nodes S4 and S5 took the role of additional HOBs for their respective downstream segments and continued generating containers **305** and the sequence (ID) numbers **306'** without interruption based on their internal (local) clock and sequence counter (internal counter value). Connection from node S4 to node S1 and connection from node S7 to node S5 were connections internal to their respective segments and not affected by the link failure, while connection from node S8 to node S3 was interrupted due to the link failure. After reconnection of node S4 to node S5, S4 receives containers with the clock from the upstream node (i.e. node S5 for the direction of bus B) again. However, node S4 does not forward the received containers at first. Instead, node S4 keeps generating containers at its own clock rate and with its own sequence numbers downstream, because the counters of the two segments may have drifted apart during disconnection due to clock tolerances (i.e. both clocks for the two segments are asynchronous).

When the two segments **301-1, 301-2** are reconnected, they continue with different numbering states, i.e. the nodes S1 - S4 in segment **301-1** have counter values 1 - 4, while the nodes S5 - S8 in segment **301-2** have counter values 3 - 6. Thus, it is assumed that, in this example, the container which has passed node S5 (and which will be received by node S4) has the container ID number 2 as indicated by **306'** and thus the upstream segment S8-S7-S6-S5 of bus B has drifted two units behind compared to the downstream segment S4-S3-S2-S1 (because node S4 expects to receive the container ID number 4 as indicated by its counter value **304').** For the sake of simplicity, **Fig. 3(b)** assumes a modulo-7 (N=7) numbering cycle of containers, i.e. applying a sequence 1,2,3,4,5,6,7,1,2,3... as the container IDs. In other embodiments, N may be 1600 as determined based on a transmission rate on the bus, or an arbitrary number of containers can be considered in a container cycle.

In the example, node S4 detects an offset **303** (i.e. offset=2) between its counter value **304'** (i.e. counter value=4) and the received container ID number **306'** (i.e. ID=2). Subsequently, S4 reports this offset via the control channel **302** to the network management system and to the upstream HOB S8. It is noted that the offset has no impact on the intra-segment connections (i.e. connection **311** from node S4 to node S1 and connection **312** from node S7 to node S5) as long as S4 generates its own containers and sequence numbers. However, in order to restore previously interrupted inter-segment connections (e.g. connection **313),** the numbering schemes may be re-synchronized. If nodes S1 - S4 simply overwrite their counters with the numbers received from node S8, their internal isochronous connections may experience a jitter, because the next container assigned to the connection (from node S4 to node S1) may arrive earlier or later than expected. To ensure synchronous transmission, it may be beneficial to re-synchronize asynchronous segments (i.e. re-synchronize the nodes along the segments) without affecting working connections.

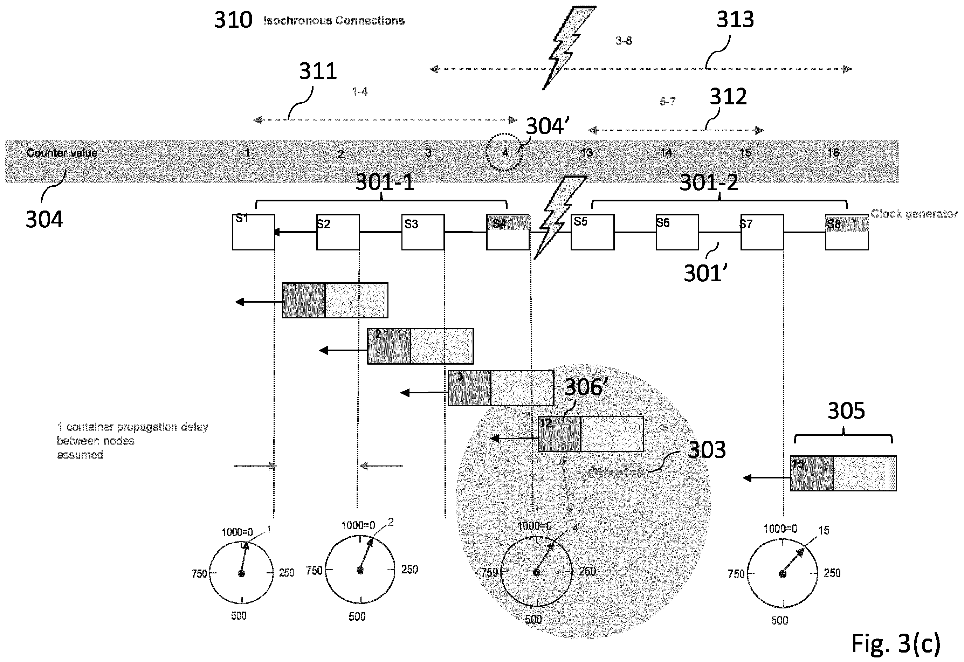

**Fig. 3(c)** illustrates another example regarding a situation after a link failure between S4 and S5 had occurred and has been repaired. Similar to **Fig. 3(b)****,** nodes S1 - S8 are coupled by a segmented link **301'** (after being repaired but before numbering re-synchronization). Compared to **Fig. 3(b)****,** **Fig. 3(c)** shows that segment **301-2** has another numbering state, i.e. the nodes S5 - S8 in segment **301-2** have counter values 13 - 16. Thus, in this example, the container which has passed node S5 (and which will be received by node S4) has the container ID number 12 as indicated by **306'** and thus the upstream segment S8-S7-S6-S5 of bus B has drifted eight units ahead compared to the downstream segment S4-S3-S2-S1 (because node S4 expects to receive the container ID number 4 as indicated by its counter value **304').** Therefore, node S4 detects/reports an offset **303** (i.e. offset=8) between its counter value **304'** (i.e. counter value=4) and the received container ID number **306'** (i.e. ID=12).

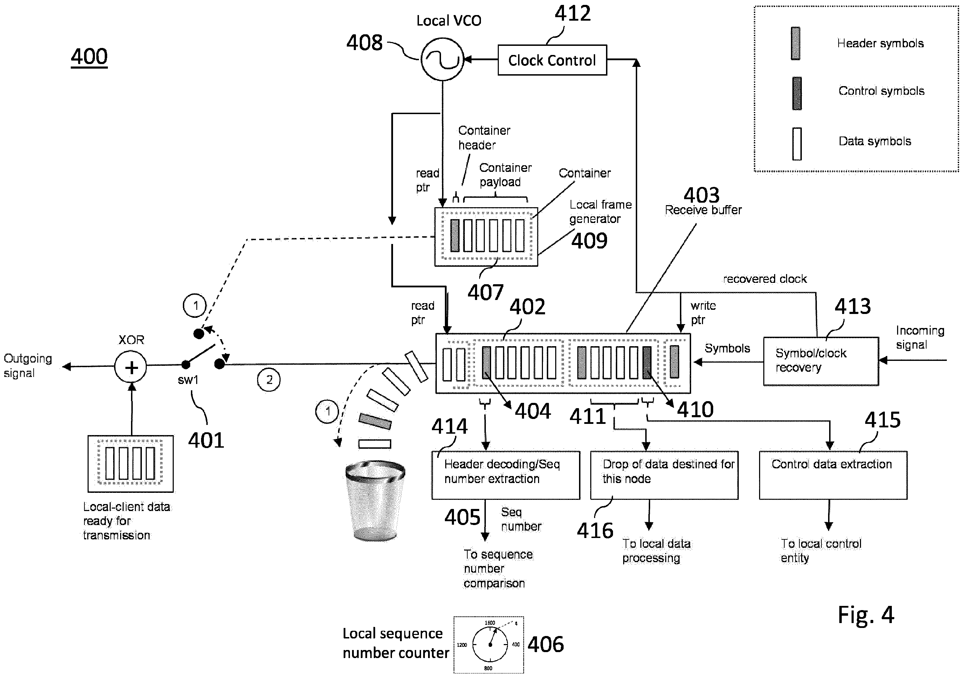

**Fig. 4** schematically illustrates an example apparatus for container processing for re-synchronizing nodes after reconnection according to embodiments of the disclosure. It is appreciated that the apparatus **400** may be employed in a node of an optical network, for example, in any of the nodes illustrated in **Fig. 3(b)****.** In particular, the apparatus **400** may be used in node S4 of **Fig. 3(b)** for re-synchronization. As mentioned above, after reconnection and re-synchronization of the transmission line (e.g. an optical fiber) between nodes S4 and S5, node S4 receives (through an optical input interface) incoming containers **402** from the upstream node (e.g. node S5) but may keep the two bus segments **301-1, 301-2** separated for a while by placing a switch **401** in position 1.

As the containers **402** received from node S5 enter a receive buffer **403** at the upstream clock rate, a processing unit (not shown) of the apparatus **400** may read the sequence numbers **405** (i.e. the container IDs) in the container headers **404** to monitor/identify the difference in the numbering of the two segments. This difference can be referred to as a numbering offset indicative of a difference between the container ID number **405** of the received container and the internal counter value **406** of node S4.

It should be noted that node S4 may not forward the containers downstream before the numbering (i.e. the container ID number **405** and the node counter value **406)** is re-synchronized. Instead, node S4 may discard the containers after performing reading, as illustrated by position 1. Further, node S4 may also keep generating (new) containers **407** to downstream nodes (e.g. node S3 of Fig. 3(b)) itself at the pace of its own local clock **408** using its local generator **409.** However, node S4 may be able to receive control messages **410** from the upstream node S5 and also to receive data traffic **411** destined to node S4.

In order to re-synchronize the numbering, the HOB on one of the segments may increase or decrease its frequency for a short time to accelerate or slow down the number cycle on the segment until the number cycle catches up with the number cycle on the other segment. In the embodiment, node S4 (which is the HOB on segment **301-1** for the bus B direction) may adjust its frequency (e.g. the local (transmit) clock **408** of node S4) through a clock controlling unit **412** to accelerate or slow down the number cycle on segment **301-1** until the number cycle on segment **301-1** catches up with the number cycle on segment **301-2.** In particular, the clock controlling unit **412** may adjust the local transmit clock **408** of node S4 based on a frequency control signal (i.e. a controlled frequency change) which may relate to the numbering offset.

It is appreciated that a clock difference between two currently asynchronous clocks may be exploited without explicitly triggering. It is further appreciated that positive and negative frequency changes are allowed for frequency adjustment, which reduces the maximum numbering difference to catch up with by half (e.g. reducing from 1600 to 800 by going back or forth on the modulo-1600 clock face). Moreover, to remain hitless during the adjustment, the slope of the controlled frequency change shall be smooth enough such that the receiver (e.g. the downstream node S3) can follow the sender clock (e.g. the local clock **408** of node S4) without loss of synchronization. For example, the total change in the local clock frequency (e.g. 10ppm) may be smaller than the clock tolerance specified for multiplex signals in the Optical Transport Network (which may be around 20ppm). It is noted that 1ppm tolerance may cause a drift of e.g. 10 containers/second at a bus rate of 1Tbps with containers of 100000bits.

Notably, the numbering offset may decrease if the frequency of the local clock **408** is properly adjusted (increased or decreased). When the numbering scheme is re-synchronized (i.e. the container ID number is synchronized with the node counter value, which leads to the numbering offset equal to zero), the switch **401** may be placed in position 2 and symbols incoming from node S5 may be forwarded at the start of a next container at the upstream clock rate (e.g. the clock rate of node S5). At the same time, the frequency change (i.e. the frequency control signal) may be reversed. This mechanism is possible due to the buffer between the receive and transmit path, which provides elasticity for changes of the instantaneous clock and enables switching back to the standard data path at container boundaries by moving the read pointer accordingly.

In case that the upstream HOB is responsible for the clock (frequency) change, the numbering offset may be communicated regularly via the control channel or even at bus speed via signaling fields in container headers on the opposite bus to inform the upstream HOB of the numbering offset, so as to reduce clock offset (frequency changes) when the target (e.g. complete synchronization between the container ID and the counter value, which can be referred to "numbering offset=0", the number of containers to be caught up, and so on) is close to avoid overshooting the target. Accordingly, the frequency of the local clock can be properly adjusted by deriving a continuous control signal from the numbering scheme drift and translating this control signal into a controlled frequency change of one bus segment. The skilled person will appreciate that re-synchronization progress may be monitored instantaneously and re-connection of segments/resynchronization of clock rates can be performed when the target is reached (e.g. the numbering offset approaching or equal to zero).

In further detail, the receiver of S4 may recover an incoming clock signal (e.g. the clock from S5) for adjusting the frequency of the local clock **408** and enter container synchronization state after reconnecting the two segments. For example, the processing unit of the apparatus **400** may include a clock recovery unit **413** to recover the incoming clock signal from symbols of the received incoming containers. It should be noted that the incoming clock signal may indicate a clock rate at which the incoming containers are received. Subsequently, the processing unit decodes headers of the incoming containers for extracting the sequence numbers **405** (as indicated by block **414),** payload destined for the local node (e.g. node S4) (as indicated by block **416),** and also potential control information contained at the end of a container (its presence may be indicated in a header flag) to maintain the control channel with upstream nodes (as indicated by block **415).**

Accordingly, node S4 computes the numbering offset as the difference between the local counter and the received sequence number, and adapts the local clock of S4 (the resulting clock after the adjustment can also be referred to as an outgoing clock of node S4) to follow the incoming recovered clock plus/minus a desired frequency offset to accelerate/slow down the cycle period. The frequency offset may relate to the controlled frequency change and may be applied until the received sequence number (container ID) matches the local counter value. When the received container ID coincides with the counter value, the frequency offset may then be set to zero and the outgoing clock of node S4 may be set back to the incoming clock. By this way, smooth re-synchronization can be performed without hitting downstream connections with e.g. phase errors.

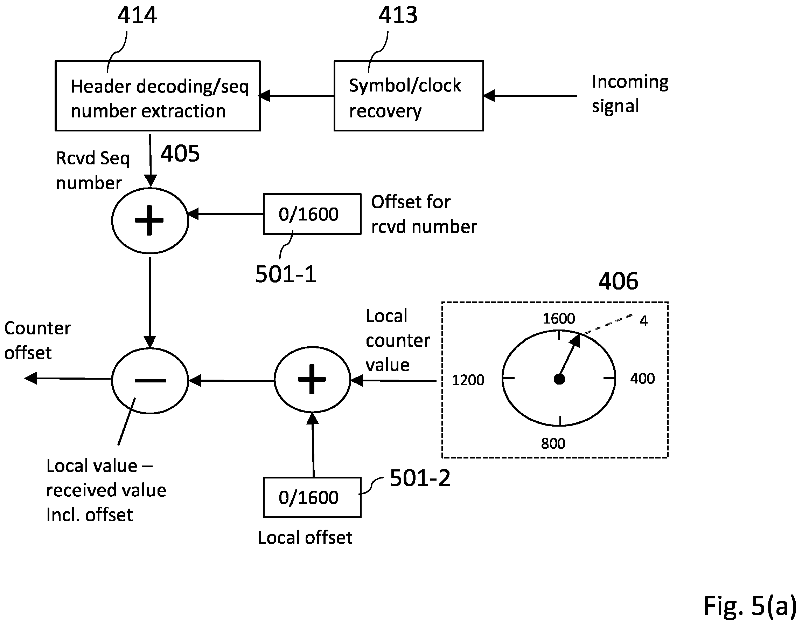

**Fig. 5(a)** schematically illustrates an example for identifying the numbering offset according to embodiments of the disclosure. In particular, this example shows how to calculate the (continuous) control signal for steering the frequency offset, which can be implemented in the setup of **Fig. 4****.** Herein, some elements shown in **Fig. 5(a)****,** such as block **414** for header decoding and the clock recovery unit **413** etc., may be also found in the setup of **Fig. 4****,** which will not be repeated for simplicity. To generate a continuous control signal, an offset buffer **501-1, 501-2** (which can be maintained in e.g. a storage unit of the apparatus **400)** may be implemented for each counter, i.e. for the received sequence numbers (container IDs) **405** and the internal counter values of node S4 **406.** More specifically, the offset buffer value may be zero or the number of containers in a container cycle (e.g. 1600) to be added to the received sequence numbers and the node counter values. In case that the container ID number of the received incoming container (i.e. the received sequence numbers **405)** has exceeded the number of containers in the container cycle, the offset buffer value may be assigned as the number of containers in the container cycle for being added to the received sequence numbers. Alternatively or in addition, In case that the node counter value **406** has exceeded the number of containers in the container cycle, the offset buffer value may be assigned as the number of containers in the container cycle for being added to the node counter value. On the other hand, if the received sequence number and/or the node counter value does not exceed the number of containers, the respective offset buffer values may be set to zero or may not be added. For identifying (calculating) the numbering offset, the offset buffer value may be added to the received sequence numbers and/or the node counter values before the difference is calculated. Accordingly, possible phase jumps occurring at the transition from the last container ID number in a cycle to the first container ID number in a next cycle (e.g. from 1600 to 1) can be properly corrected, thereby enabling generation of a continuous control signal that represents the numbering offset (i.e. offset signal generation).

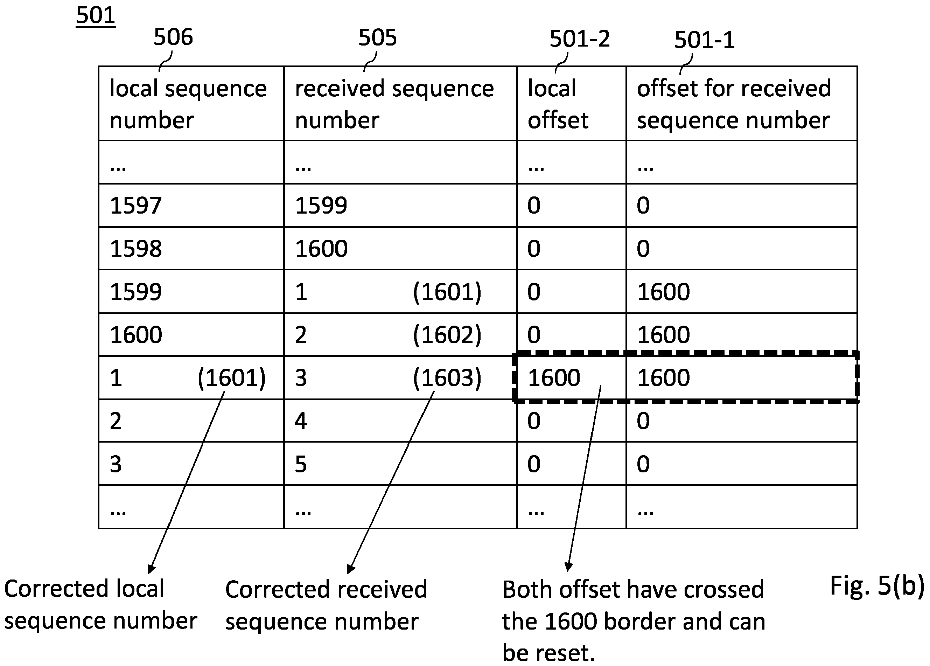

**Fig. 5(b)** schematically illustrates an example of employing offset buffer values for identifying the numbering offset according to embodiments of the disclosure. As illustrated, columns **501-1, 501-2** indicate the offset buffer values to be added to the received sequence numbers **405** and the node counter values **406,** respectively. It should be noted that columns **505, 506** indicate the received sequence numbers **405** and the node counter values **406** (herein also referred to local sequence numbers), respectively. Moreover, the results of adding the offset buffer values to the received sequence numbers **405** and the node counter values **406** (i.e. the corrected received sequence number and the corrected local sequence number) are represented in brackets. In this example, when the received sequence number exceeds 1600, the next received sequence number 1 may be added with 1600 (as stored in column **501-1),** and the received sequence number then becomes 1601 (see column **505),** which gives a consistent counter offset (the numbering offset) of 2. Similarly, when the node counter value exceeds 1600, the next node counter value 1 may be added with 1600 (as stored in column **501-2),** and the node counter value then becomes 1601 (see column **506),** which gives a same counter offset of 2. It should be noted that the buffer **501-1, 501-2** of a counter **(405** or **406)** may be set with the value 1600 when the counter crosses the 1600 border and may be reset after the other counter **(406** or **405)** has also crossed the border (i.e. the buffer value 1600 is added after one counter has exceeded 1600 and until both counters have exceeded 1600). By this way, jumps in the offset signal can be avoided.

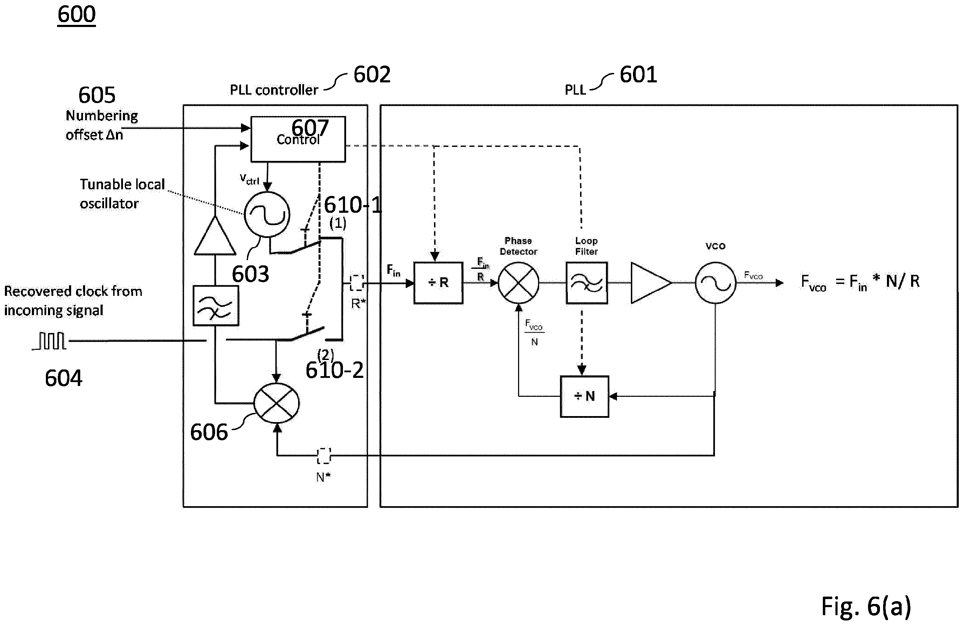

**Fig. 6(a)** schematically illustrates an example of a clock controlling unit for adjusting the local transmit clock of the node according to embodiments of the disclosure. The skilled person will appreciate that the clock control functional block shown in **Fig. 6(a)** may be applicable to the apparatus **400,** especially to the clock controlling unit **412** of the apparatus **400.** In the embodiment, the clock controlling unit **412, 600** includes a phase-locked loop (PLL) for frequency adjustment and a signal generating unit (now shown) to generate the frequency control signal to be applied by the PLL based on the numbering offset. It should be noted that the frequency control signal may relate to a frequency difference (frequency offset) between an input frequency and an output frequency of the PLL. By setting the frequency difference properly, the outgoing clock of the node (S4) can be controlled accordingly.

As shown in **Fig. 6(a)****,** the nucleus of the steering mechanism in the clock controlling unit **600** is a PLL **601** whose output clock F_{vco} is a function of the input clock Fᵢₙ and the ratio of N/R, where N and R are frequency dividers, and thus F_{vco}=(N/R) x Fᵢₙ. A frequency offset between F_{VCO} and Fᵢₙ can be achieved by steering the ratio N/R. To accelerate the outgoing clock by 10ppm, N can be set e.g. to 100 001 and R can be set to 100 000. On the other hand, one may slow down the outgoing clock by 10ppm if the values for N and R are reversed. Moreover, the PLL **601** may be extended by a PLL controller **602** with similar structure. The PLL controller **602** may make the local oscillator **603** and thereby Fᵢₙ of the PLL **601** follow the recovered clock **604.** As long as the numbering offset **605** remains (i.e. |Δn| >0), the controller **602** may also set N and R to achieve the desired offset between F_{VCO} and Fᵢₙ. Hence, the entire architecture may include an inner PLL control loop inside an outer control loop **602** (two-stage PLL).

During a link failure, the controller **602** connects Fᵢₙ to the local oscillator **603** (i.e. the switch **610-1** is on), because the recovered clock **604** from the upstream node (e.g. node S5) is not available. After the recovered clock F_{rec} is available again, this situation may persist as long as the numbering schemes are still asynchronous (i.e. the numbering offset Δn≠0). A phase detector **606** in the PLL controller **602** compares the feedback signal of the outgoing clock F_{VCO} with the recovered clock F_{rec} and signals a difference to the control entity **607,** which changes the steering voltage v_{ctrl} for the local oscillator **603** such that Fᵢₙ becomes F_{rec} and hence the output clock becomes F_{vco}=(N/R) x F_{rec}. Subsequently, the divider values N and R may be changed smoothly to keep the downstream clock recovery mechanism in S3 locked while F_{vco} is running faster (or slower) than F_{rec}. As the numbering offset is reduced, the ratio N/R may approach 1, at which point both the clock of the local oscillator 603 and F_{VCO} follow F_{rec}. When both the clock of the local oscillator **603** and F_{vco} follow F_{rec}, the controller **602** switches Fᵢₙ back to the incoming recovered clock F_{rec} (i.e. the switch **610-2** is on). It is noted that instead of using the dividers to achieve an offset between F_{vco} and Fᵢₙ according to the numbering offset, the frequency offset between F_{vco} and Fᵢₙ may relate to a frequency control signal that can also be generated by a signal generating unit included in the control entity **607** and may be directly applied to the VCO **603** to steer Fᵢₙ.

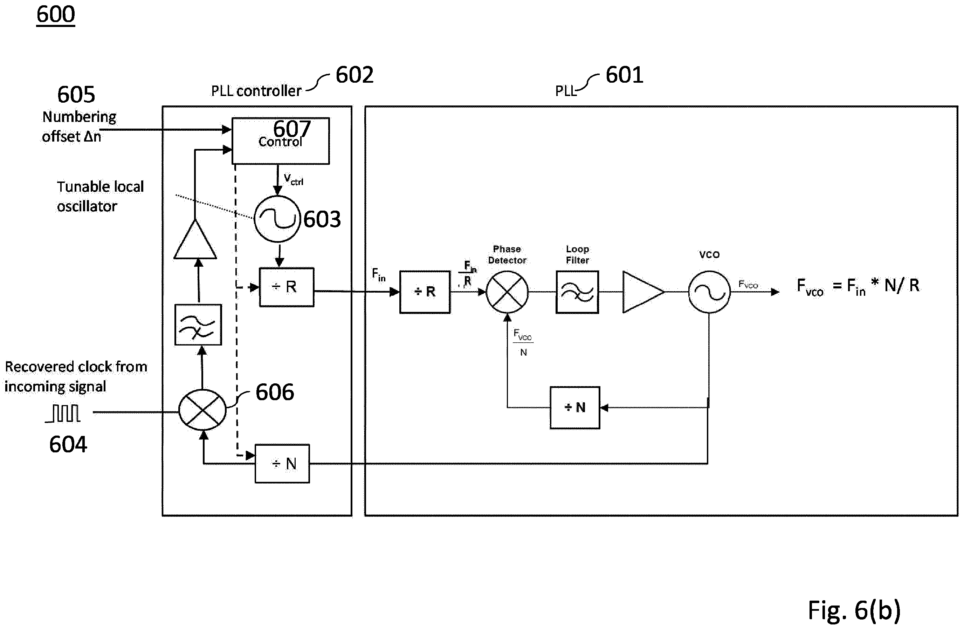

The skilled person will appreciate that the PLL shown in **Fig. 6(a)** is an example model chosen for explanation purposes. In some embodiments, switches **610-1, 610-2** may be omitted as illustrated in **Fig. 6(b)****,** where a control signal is derived from the numbering offset and then added to phase error between the local clock of the node (i.e. F_{vco}) and the recovered clock **604** for locking the clock of the local oscillator 603 (Fᵢₙ) and F_{vco} to the recovered clock **604** (F_{rec}) without switching Fᵢₙ back to the incoming recovered clock **604** (F_{rec}). Other PLL types which may have more sophisticated architectures are also suitable for implementation of the functionality as described above.

Also, it should be noted that the dividers N and R may be incorporated into the PLL controller **602** (indicated by N* and R*) in **Fig. 6(a)** and **Fig. 6(b)****,** or the dividers N and R may even be omitted, if the control entity **607** combines both the phase difference between F_{vco} and F_{rec} and the numbering offset Δn into a single steering voltage v_{ctrl}. It is further appreciated that, in the middle of the re-synchronization process, the divider values and hence the frequency offset may be probably constant, and the container catching up runs at full pace. However, it may be desirable to smooth the ascending slope at the starting stage and also the descending slope when approaching the target, in order to keep the downstream station S3 synchronized and not to overshoot the target. In some embodiments, smooth slopes may be achieved by e.g. incrementing the higher divider step by step and then decrementing it by one with every container which has been caught-up.

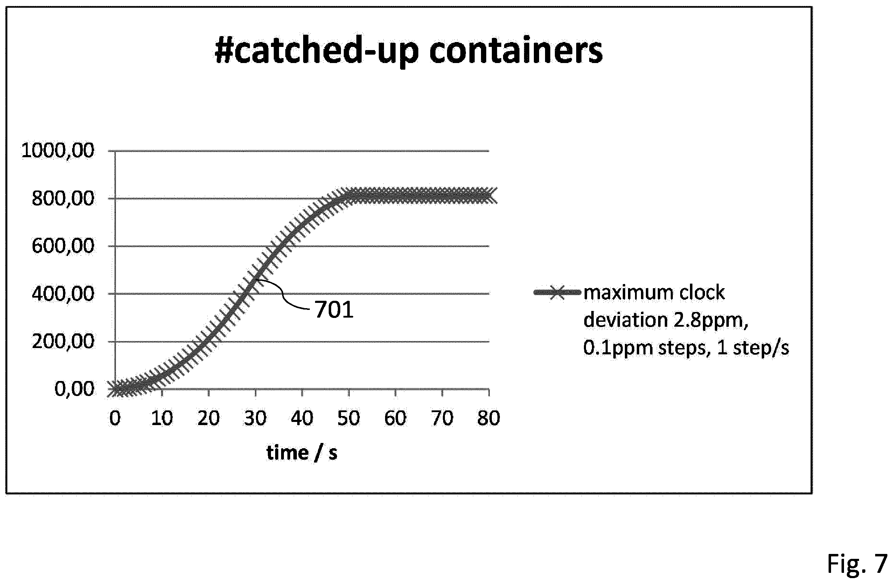

**Fig. 7** graphically illustrates the synchronization performance using the proposed apparatus according to embodiments of the disclosure. Herein, the synchronization time is estimated for a worst-case scenario of 800 containers to catch up with a (given) modulo-1600 cycle. As shown by curve **701,** the number of caught containers increases along with the cycle re-synchronization time with smooth slopes for maintaining synchronization with the downstream station. It should be noted that changes in the slope of the curve may relate to the local clock of node S4 and the local clock may depend on the frequency offset that is associated with the frequency control signal applied (by the PLL 601) for frequency adjustment. In this example, a maximum total frequency offset of 2.8ppm is applied for adjusting the frequency of the local clock, which is far below the tolerance allowed for a clock of e.g. the Optical Transport Network (20ppm).

As indicated, the slope of the curve increases gradually until 400 containers are caught up, which implies that, starting from the nominal rate, the (local) clock rate is increased by steps of 0.1ppm/s in the nominal frequency until 400 containers are caught up. At this time (i.e. time ∼28 seconds), the total frequency offset has accumulated to 2.8ppm. After 400 containers have been caught up, the slope of the curve decreases, which indicates that the frequency of the clock is then decreased again in the same way until the target of catching up 800 containers is reached. In this example, total resynchronization time is less than 50 seconds. Notably, this performance may be considered rather an upper bound on resynchronization time and may likely be further improved or optimized by e.g. having more frequent (fine) steps than one step per second (e.g. a seamless adjustment).

It is appreciated that the synchronization time is small compared to failure repair time, so that the node synchronization (or re-synchronization) can be efficiently accomplished. Besides, although the control mechanism in the embodiments mainly focuses on adapting the local clock of nodes in the downstream segment to the node clock in the upstream segment, i.e. the proposed apparatus is employed in a node of the downstream segment (e.g. node S4 in segment **301-1** of **Fig. 3(b)****),** the proposed apparatus may also be employed in a node of the upstream segment (e.g. node S5 in segment **301-2** of **Fig. 3(b)****).** In case that the upstream segment is much shorter than the downstream segment, it may be desirable to adapt the part of the bus where fewer nodes have to change (i.e. the upstream segment in this case).

Moreover, the upstream HOB may be informed of the counter offset of the downstream HOB by receiving the counter offset in regular intervals via the control channel. In some embodiments, the upstream HOB can also agree on the frequency adjustment with the downstream HOB and can change the frequency of the upstream HOB. It may allow for some time to get feedback on the effect of the frequency change via the control channel on the opposite bus. The downstream HOB can then autonomously reconnect the bus segments as soon as it enters synchronization state.

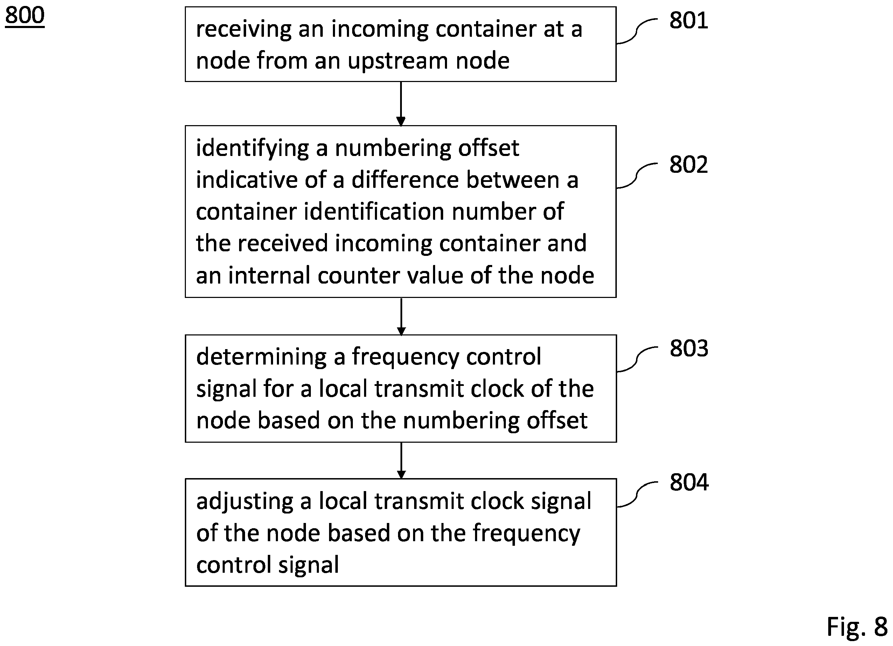

**Fig. 8** illustrates processing steps for the proposed method for synchronizing multiple nodes in an optical network according to embodiments of the disclosure. The method **800** can be implemented by, for example, any of the nodes S1 - S8 as illustrated in **Fig. 3(b)****,** especially by the HOBs of the segments. The method **800** comprises receiving (step **801),** at a node, an incoming container from an upstream node. The method **800** also comprises identifying (step **802)** a numbering offset indicative of a difference between a container identification number of the received incoming container and an internal counter value of the node. In particular, the internal counter value may be maintained to track container identification numbers of containers received by the node. The method **800** further comprises determining (step **803)** a frequency control signal for a local transmit clock of the node based on the numbering offset and adjusting (step **804)** a local transmit clock signal of the node based on the frequency control signal.

As mentioned above, containers have respective container identification numbers which are arranged in sequence using a cyclic numbering scheme, where a same container identification number is repeated after a container cycle has been reached. By this way, the containers are transmitted in a cyclic order of the respective container identification numbers.

The frequency control signal for the local transmit clock may adapt the local transmit clock by increasing or decreasing the clock frequency such that, if the expected container identification numbers as indicated by the counter value advance the received container identification numbers, the clock frequency is reduced to slow down the rate at which containers are sent out until a match between counter value and received container identification numbers is achieved. On the other hand, if the expected container identification numbers as indicated by the counter value lag the received container identification numbers, the clock frequency is increased to speed up the rate at which containers are sent out until a match between counter value and received container identification numbers is achieved. The amount for adjusting the clock frequency may depend on the amount of the currently determined numbering offset. For example, a large amount of numbering offset may result in a large clock frequency adjustment and a small amount of numbering offset may result in a small clock frequency adjustment. In embodiments, the clock frequency may be changed in steps with e.g. fixed increments or decrements. For example, the clock frequency may be increased or decreased stepwise (by a fixed amount) until the numbering offset has been reduced by a certain amount or ratio (e.g. until 50% of the numbering offset has been removed). Then, the change in the clock frequency may be reversed stepwise until the numbering offset is completely eliminated. Thus, abrupt changes in clock frequency are avoided. A maximum clock frequency change amount may be applied and the change in clock frequency clamped at that value when it is reached by the frequency change steps, until a certain amount or ratio of the numbering offset has been removed. Then, the clock frequency may be returned stepwise to its nominal value. Of course, other schema for determining the amount of the frequency control signal and controlling the clock frequency change may be applied.

It should be noted that the device features described above correspond to respective method features that may be however not explicitly described, for reasons of conciseness. The disclosure of the present document is considered to extend also to such method features.

Accordingly, by means of the proposed method and apparatus, the reservation scheme for isochronous traffic connections can be restored after a failure without hitting intra-segment connections of the adapting segment. Furthermore, phase jumps caused by simply resetting counter values for the respective connections can be avoided.

As transport network services provide synchronization and timing information with forwarding-delay inaccuracies of 100ns to 1ms, which cannot be guaranteed by circuit emulation over a packet network, a reserved channel may be necessary for these services/applications. The reserved channel may be implemented over shared media through a booking system that may require re-synchronization after a failure occurs. The proposed method and apparatus enable efficient network (re-)synchronization for such services/applications and provide a reliable way to resynchronize the reservation scheme without hitting client connections with a phase error.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for synchronizing multiple nodes in an optical network through which at least one client data packet is transmitted, wherein the at least one client packet is synchronously placed in one or more containers that are routed through the network, wherein a container is associated with a time slot allocated for transmitting the container through the network and comprises a container identification number in a container header of the container to identify the time slot associated with the container, wherein the one or more containers having respective one or more container identification numbers are arranged in sequence using a cyclic numbering scheme that repeats a same container identification number after a container cycle has been completed, so that containers are transmitted in a cyclic order of the respective container identification numbers, the method comprising:
receiving, at a node, an incoming container from an upstream node;
identifying a numbering offset indicative of a difference between a container identification number of the received incoming container and an internal counter value of the node, wherein the internal counter value is maintained to track container identification numbers of containers received by the node;
determining a frequency control signal for a local transmit clock of the node based on the numbering offset;
adjusting a local transmit clock signal of the node based on the frequency control signal.

2. The method of claim 1, wherein determining a frequency control signal for a local transmit clock of the node and adjusting a local transmit clock signal of the node are performed after reconnecting the node to the upstream node.

3. The method of claim 1 or 2, further comprising, in case that the container identification number of the received incoming container has exceeded the number of containers in the container cycle, adding an offset buffer value comprising the number of containers in the container cycle to the container identification number of the received incoming container for identifying the numbering offset.

4. The method of claim 1 or 2 or 3, further comprising, in case that the internal counter value has exceeded the number of containers in the container cycle, adding an offset buffer value comprising the number of containers in the container cycle to the internal counter value for identifying the numbering offset.

5. The method of any of previous claims, wherein adjusting a local transmit clock signal of the node comprises increasing or decreasing the frequency of the local transmit clock of the node based on the frequency control signal, wherein containers are transmitted to other nodes based on the local transmit clock, wherein the numbering offset decreases along with increasing or decreasing the frequency of the local transmit clock.

6. The method of any of previous claims, further comprising recovering, from the received incoming container, an incoming clock signal, wherein the local transmit clock signal of the node is adjusted further based on the obtained incoming clock signal.

7. The method of claim 6, further comprising, once the numbering offset has been eliminated, synchronizing the local transmit clock signal of the node with the recovered incoming clock signal, so that the timing of a transmitted container coincides with a time slot allocated for a corresponding received incoming container.

8. The method of claim 6 or 7, further comprising forwarding the received incoming container to a downstream node based on the incoming clock signal in case that the numbering offset approaches or has reached zero.

9. The method of any of previous claims, further comprising generating, at the node, a new container to be transmitted to a downstream node using the local transmit clock signal of the node.

10. The method of any of previous claims, wherein the received incoming container is buffered at the node, further comprising decoding a container header of the received incoming container and extracting the container identification number of the received incoming container and/or control information received via a control channel, and/or dropping data destined to the node, and/or discarding the received incoming container after extracting the container identification number of the received incoming container.

11. Apparatus for synchronizing multiple nodes in an optical network through which at least one client data packet is transmitted, wherein the at least one client data packet is synchronously placed in one or more containers that are routed through the network, wherein a container is associated with a time slot allocated for transmitting the container through the network and comprises a container identification number in a container header of the container to identify the time slot associated with the container, wherein the one or more containers having respective one or more container identification numbers are arranged in sequence using a cyclic numbering scheme that repeats a same container identification number after a container cycle has been completed, so that containers are transmitted in a cyclic order of the respective container identification numbers, the apparatus employed in a node of the network and comprising:
an optical input interface coupled with the optical network and configured to receive an incoming container from an upstream node;
a processing unit configured to identify a numbering offset indicative of a difference between a container identification number of the received incoming container and an internal counter value of the node, wherein the internal counter value is maintained to track container identification numbers of containers received by the node; and
a clock controlling unit configured to determine a frequency control signal for a local transmit clock of the node based on the numbering offset and to adjust the local transmit clock of the node based on the frequency control signal.

12. The apparatus of claim 11, further comprising a storage unit configured to store an offset buffer value representing the number of containers in the container cycle, wherein the processing unit is further configured:
in case that the container identification number of the received incoming container has exceeded the number of containers in the container cycle, to add the offset buffer value to the container identification number of the received incoming container for identifying the numbering offset, or
in case that the internal counter value has exceeded the number of containers in the container cycle, to add the offset buffer value to the internal counter value for identifying the numbering offset.

13. The apparatus of any of claims 11 - 12, wherein the clock controlling unit is configured to increase or decrease the frequency of the local transmit clock of the node based on the frequency control signal, wherein containers are transmitted to other nodes based on the local transmit clock, wherein the numbering offset decreases along with increasing or decreasing the frequency of the local transmit clock.

14. The apparatus of any of claims 11- 13, wherein the processing unit comprises a clock recovery unit configured to recover the incoming clock signal from symbols of the received incoming container, wherein the incoming clock signal is indicative of a clock rate at which the incoming containers are received.

15. The apparatus of any of claims 11 - 14, wherein the clock controlling unit comprises a phase-locked loop (PLL) configured to adjust the local transmit clock of the node, a signal generating unit configured to generate the frequency control signal to be applied by the PLL for the adjustment based on the numbering offset, wherein the frequency control signal relates to a frequency difference between an input frequency and an output frequency of the PLL.
